(19) Europäisches Patentamt
European Patent Office
Office européen des brevets

(11) Publication number: **0 470 287 A1**

## (12) EUROPEAN PATENT APPLICATION

(21) Application number: 90115333.8

(22) Date of filing: 09.08.90

(51) Int. Cl.5: **A01N 63/00**, A01N 63/04, A01N 25/12, //(A01N63/00, 63:04,25:12)

(43) Date of publication of application:
**12.02.92 Bulletin 92/07**

(84) Designated Contracting States:
**DE FR GB IT NL**

(71) Applicant: **SHOWA DENKO KABUSHIKI KAISHA**
**13-9, Shiba Daimon 1-chome**
**Minato-ku, Tokyo 105(JP)**

(72) Inventor: **Nishimura, Kunio, c/o Showa Denko K.K.**
**13-9, Shiba-daimon 1-chome, Minato-ku**
**Tokyo(JP)**
Inventor: **Iijima, Hitoshi, c/o Showa Denko K.K.**
**13-9, Shiba-daimon 1-chome, Minato-ku**
**Tokyo(JP)**
Inventor: **Takahashi, Hiroyuki, c/o Showa Denko K.K.**
**13-9, Shiba-daimon 1-chome, Minato-ku**
**Tokyo(JP)**
Inventor: **Morishita, Teizo, c/o Showa Denko K.K.**
**13-9, Shiba-daimon 1-chome, Minato-ku**
**Tokyo(JP)**
Inventor: **Chiba, Tomotane, c/o Showa Denko K.K.**
**13-9, Shiba-daimon 1-chome, Minato-ku**
**Tokyo(JP)**

(74) Representative: **Strehl, Schübel-Hopf, Groening**
**Maximilianstrasse 54 Postfach 22 14 55**
**W-8000 München 22(DE)**

(54) **Granular material for control of soil-borne diseases and method for control of soil-borne diseases with the granular material.**

(57) A granular material for the control of soil-borne disease contains saprophytic microbial bodies and is coated with 10 to 45% by weight of a hydrophobic substance. A method for the control of soil-borne disease includes adding the granular material to the soil under treatment.

This invention relates to a granular material containing saprophytic microbial bodies for the control of soil-borne diseases and a method for the control of soil-borne diseases. More particularly, this invention relates to a granular material for controlling soil-borne diseases and containing a saprophytic microbial body such as an antagonistic microorganism. The term "soil-borne diseases" used herein means diseases of plants induced by microorganisms in soil.

When the granular material is plowed in soil, the saprophytic microbial bodies are stably retained in the soil and are gradually released from the grains, thereby to prevent soil-borne diseases.

In recent years, agriculture in Japan has become highly profit oriented. There has been a cutback of the area used for cultivation of common crops and a collapse of the conventional system of crop rotation. Cultivation has come to focus solely on highly profitable crops. Further, the advance of horticulture under structure has now made it feasible to construct permanent facilities for cultivation and to operate them for the cultivation of crops of one and the same kind all the year round. This trend is encouraging the practice of repeated cultivation of one and the same crop and accelerating the change of soil habitat due to heavy and continuous use of chemical fertilizers, soil conditioners, and herbicides, and promoting the occurrence of soil-borne diseases. As countermeasures, a method for lowering the density of pathogenic fungi by the use of a fungicide, a method for curbing the activity of pathogenic fungi, a method for fortifying the resistance of soil to pathogenic fungi, etc. have been adopted, without fully satisfactory results. In recent years, a method which prevents pathogenic fungi from affecting the soil by means of a large amount of biotic bacteriocide incorporated in the soil has come to attract growing attention.

P. A. Backman et al. have developed a granular material produced by culturing trichoderma in diatomaceous clay particles containing black molasses (Phytopathology, 65, 819-821, 1975), K. E. Conway et al. a method for the incorporation of conidia of trichoderma in RABONAITO (Phytopathology, 72, 982, 1982), W. D. Kelley a granular material prepared by culturing trichoderma in clay materials incorporating therein black molasses and potassium nitrate (Phytopathology, 66, 1023-1027, 1976), and J. A. Lewis et al. a gelation granular material produced by culturing conidia, chlamydospores, and live masses of various microorganisms represented by trichoderma by the use of sodium alginate and powdery wheat bran or kaoline clay (Phytopathology, 74, 836, 1984, Plant Pathology, 34, 571-577, 1985). D. R. Fravel et al. have reported a gelation granular material produced by treating various seed microorganisms with arginic acid in a Pyrex vial (Phytopathology, 74, 756, 1984, Phytopathology, 75, 774-777, 1985) and disclosed a granular material obtained by immobilizing microorganisms with such macromolecular substances as agarose, cellulose, dextrin, and arginic acid (Japanese Patent Public Disclosure SHO 62(1987)-234005). The granular materials disclosed by these publications are invariably granulated each with an aqueous medium. Though these granular materials manifest discernible effects in tests, they fail to produce sufficient effects in actual use because the microorganisms are not stable in the granules and are deficient in the soil. None of the granular materials of coated microorganisms of this class has ever been adopted for practical use.

Such granular materials of coated microorganisms find no utility in actual use for the following reasons. Firstly, the microorganisms are conspicuously unstable in the soil and no known method is capable of stabilizing the microorganisms in the soil. More specifically, numerous species of microorganisms coexist randomly and inhabit the soil in a definite balance. When highly effective antagonistic microorganisms are incorporated in the soil of the nature described above, though they may temporarily succeed in disturbing the microorganisms inhabiting the soil, they eventually fail to manifest their effect fully because the bacteriostatic action of the soil which tends to exclude outsiders and restore its stable ecosystem and inhibits the activity of the incorporated microorganisms.

Secondly, since the rhizosphere of a plant expands proportionately with the growth of the plant, the regions of the soil newly penetrated by growing roots of the plant do not enjoy the benefit of the preventing effect of the antagonistic microorganisms unless the microorganisms are present there. The antagonistic mycelial phase must be stably retained extensively throughout the soil, therefore, over the entire period of the growth of the plant.

Thirdly, the microorganisms generally are very unstable and susceptible to extinction. When the granules are produced in an aqueous medium as described above, the microorganisms are seriously inactivated and the yield of the granulation of microorganisms is conspicuously low.

Fourthly, since many of the microorganisms die after the granulation, the produced granular material cannot be retained long in a stable condition.

For the granular material of coated microorganisms to be practically usable, therefore, it is necessary to solve the problems mentioned above.

Through their studies, the inventors found that the problems can be overcome by the following measures. The present invention has been completed as a result.

(1) A method for granulation in a non-aqueous medium is employed for maintenance of the stability of microorganisms.

(2) For the microorganisms to be maintained stably for a long time in the soil, they are granulated and coated with a hydrophobic binder and are isolated from the soil.

(3) For the mycelial phase in the soil to remain consistent for a long time, the microorganisms are granulated in such a manner as to acquire an ability to release themselves gradually into the soil. For the impartation of this function, the optimum conditions as the kind and quantity of an excipient and a binder have been found.

(4) The best grain size of the granules and the best concentration of the microorganisms for optimizing the probability of contact between the granular material and the fungi infesting growing roots of a plant have been found.

To be specific, the present invention is directed to a granular material for the control of soil-borne diseases, which material contains saprophytic microbial bodies and is coated with 10 to 45% by weight of a hydrophobic substance, and to a method for the control of soil-borne disease, which essentially consists in adding the granular material for the control of soil-borne diseases to the soil.

The present invention will be described with respect to its specific features.

Diseases subjected to treatment

The soil-borne diseases on which the present invention manifests its effect include Pseudomonas solanacearum diseases of tomato, eggplant, pimento, potato and chrysanthemum coronarium caused by bacteria of varieties of Pseudomonas solanacearum, wilt diseases of tomato, spinach and other vegetables, Fusarium oxysporum diseases of strawberry and radish, and Fusarium oxysporum diseases of cucumber, water melon and sweet potato caused by bacteria of varieties of Fusarium oxysporum, various bacterial soft rots caused by bacteria of Erwinia carotovora, and a wide spectrum of soil-borne diseases caused by bacteria of Phytophthora, Verticillium, Plasmodiphora, Pythium, Fusarium solani, Actinomycetes, Scherotinia sclerotiorum, Rhizoctonia solani, Aphanomyces, Corticium rolfsii and so on.

Microorganisms to be used

As means of controlling soil-borne diseases by the use of microorganisms, a method which causes a change in the mycelial phase of soil microorganisms and a method which makes use of a specific antagonistic microorganism are generally known.

The specific antagonistic microorganisms to be contained in the granular material for controlling soil-borne diseases of this invention to combat pathogenic fungi include microorganisms of Agrobacterium radiobacter strain 84, microorganisms of genus Trichoderma, microorganisms of genus Penicillium, and microorganisms of genus Gliocladium, for example. The microorganisms of genus Pseudomonas and genus Bacillus to be used in bacterization for curbing the activity of pathogenic fungi and for promoting the growth of economic crops and those of genus Fusarium and genus Verticillium for inducing resistance in plants are also embraced. Various bacteria, Actinomyces, and Hyphomycetes which do not belong to pathogenic fungi are also useful. For example, sulfur bacteria, photosynthetic bacteria, nitrate bacteria, methane bacteria, root module bacteria, activated sludge, bacteria of genus Azotobacter, actinomyces of genus Streptomyces, genus Micromonosporium, and genus Nocardia, and molds of genus Aspergillus and genus Penicillium are extensively usable.

Though these microorganisms may be used singly, they may be used more effective as combined with at least one species of non-pathogenic microorganisms.

Method for granulation

When an aqueous binder is used in the granulation of microorganisms, since the microorganisms are unstable and encounter high fatality during the course of granulation or desiccation, the produced material suffers from inconsistent microorganism concentration and poor yield. To preclude this disadvantage, the present invention contemplates a method for granulation with a non-aqueous medium.

For the granulation of microorganisms with a non-aqueous medium, any method can be employed so long as it is capable of effecting granulation by, for example, thermal fusion as disclosed in Japanese Patent Public Disclosure SHO 63(1988)-63373. Granulation by stirring, granulation by rolling, granulation by extrusion, granulation by spraying, etc. are also usable. Among the methods mentioned above, the method of granulation by stirring proves to be particularly preferable. The granulation is performed at a temperature at least 5°C higher than the melting point or softening point of the binder to be used.

Microorganism concentration

Generally, where the conditions of the soil are suitable for the growth and propagation of a microorganism to be added to the soil, even if the concentration of the microorganism in the soil is low at the time of the addition thereof, it becomes very high in a short period of time. For this reason, strict restrictions are not necessarily put on the concentration of the microorganism in the granular material and on the amount of the granular material to be added to the soil. However, it is preferable that the concentration of the microorganism in the soil should be high because the higher the microorganism concentration, the less the influence of the bacteria existing in the soil. The concentration of the microorganism in the granular material is determined from the correlation between the amount of the granular material added to the soil and the relative concentration of the bacteria in the soil.

When the microorganism concentration in the granular material is unduly low, the amount of the granular material plowed in the soil must often be increased to the extent of making the treatment of the soil with the granular material uneconomical. When the microorganism concentration in the granular material is unduly high, though the amount of the material plowed in the soil may be decreased, the material inevitably has to be distributed sparsely. As a result, the ratio of contact of the material with the pathogens in the soil is lowered. Thus, the efficiency of the treatment with the material is not sufficient, particularly in the plant rhizosphere, for example.

For practical purposes, the number of the microorganisms in the granular material is in the range of $10^3$/g to $10^{11}$/g. The number of the microorganisms in the granular material was $10^{10}$/g in the actual production of a great quantity of granular material, whereas that was $10^{13}$/g on the experimental basis.

Hydrophobic substance

The material of the present invention is in the form of granules which are coated with a hydrophobic substance. This particular form is intended to prevent the microorganisms in the material incorporated in the soil from being affected by the bacteriostatic action and to allow the microorganisms to be gradually released into the soil.

As the hydrophobic substance, a binder substance is used.

In the selection of the binder substance to be used in the granular material of this invention, therefore, the following requirements must be fulfilled.

1) The granulation is desired to be performed at as low a temperature as permissible to minimize the fatality of microorganisms during granulation and to ensure manufacture of granular materials having a fixed microorganism concentration at all times. It is, therefore, important that the binder selected should possess as low a melting point or softening point as possible. The melting point or softening point is preferably in the range of 35° to 100°C.

2) The microorganisms are highly vulnerable to moisture. It is, therefore, important that the binder selected should resist absorption of moisture or dissolution in water as much as possible lest the microorganisms should die during granulation or retention in the soil.

3) The binder should be such as to avoid adversely affecting the microorganisms even after the granular material is incorporated in the soil.

4) The binder should be capable of being gradually decomposed but nevertheless incapable of adversely affecting the soil after the material is incorporated in the soil.

The inventors' study on substances which satisfy these requirements has revealed that the binders cited below prove to be desirable.

A) Vegetable and animal waxes and/or hardened oils and fats thereof such as, for example, tallow, rice wax, Japan wax, beeswax, carnauba wax, candelilla wax, lanolin, and other natural oils and fats.

B) Linear or branched saturated or unsaturated monocarboxylic acids having 14 to 22 carbon atoms.

The amount of the binder must be enough for the binder to cover the granular material and, when the granular material is in the soil, separate the non-pathogenic microorganisms from the soil to the extent of remaining clear of the bacteriostatic action. After various studies, it has been confirmed that this requirement is fulfilled when the amount of the binder is in the range of 10% by weight to 45% by weight, based on the amount of the granular material. If the amount of the binder is less than 10% by weight, the covering ratio is conspicuously low and the stability cannot be maintained long. If the amount exceeds 45% by weight, the granular material is deficient in slow-releasing property and unfavorable economically.

The granular material for controlling soil-borne diseases of this invention is obtained by mixing the saprophytic microbial bodies with an excipient and covering the resultant mixture with the aforementioned binder substance. Now, the excipient to be used in the granulation of the microorganisms will be described below.

Similarly to the binder, the excipient is required to exhibit stability and slow-release property during the granulation of microorganisms, during the storage and during the standing in the soil. The excipient to be selected should possess physical properties satisfying these conditions.

If the excipient in the granular material is a substance readily soluble in water, it dissolves in the water present in the soil and leaves behind large pores in the granular material and deprives the granular material of durability. If an inorganic salt is used as the excipient, the possibility of the inorganic salt extirpating the microorganisms under the influence of osmotic pressure increases in proportion as the concentration of the salt increases. Thus, use of a salt of high solubility is not permissible. The solubility of the substance selected as the excipient, therefore, must be not more than 5 g/100 g $H_2O$.

The excipients which satisfy these conditions include inorganic salts such as calcium sulfate, calcium carbonate and calcium phosphate, oxides such as aluminum oxide, magnesium oxide and silicon oxide, and inorganic substances such as talc and molecular sieves, for example.

Size of granular material grains

The granular material for controlling soil-borne diseases of the present invention is required to isolate the microorganisms from the soil so as to lower the fatality and heighten the stability of the microorganisms and, at the same time, to impart a slow-releasing property to the granular material and heighten the probability of contact of the microorganisms with the rhizospheres of the plants. In this respect, the size of the granules of the material is an important factor. The inventors' study on the relation between the stability and the particle size of the granular material and the relation between the slow-releasing property and the particle size showed that the coating is insufficient, the slow-release property is low, and the stability is inferior when the particle diameter is smaller than 70 $\mu$ and the speed of release of microorganisms from the interior of the granules is slow and the effect of the control of the soil-borne diseases is not manifested sufficiently when the grain diameter is larger than 10 mm.

Since distances of movement of most, if not all, of the microorganisms are short, it is desirable that the individual granules of the material should be in the regions located as closely as possible to the plant rhizospheres. In order for the probability of contact between the rhizospheres and the granular material to increase proportionately to the growth of roots of the plants, therefore, the number of individual granules of the material should be increased as much as possible and the granules should be distributed uniformly. In this respect, the particle diameter of the granules is desired to be as small as possible. The particle diameter fulfilling the conditions mentioned above is in the range of 70 $\mu$ to 10 mm, preferably 100 $\mu$ to 5 mm.

Addition of nutrient

When the saprophytic microbial bodies are incorporated together with a substance serving as a nutrient for the microorganisms and are granulated by microcapsulation, the produced material is more effective in increasing the amount of microorganisms in the material and promoting the activity of the microorganisms. The granular material of this invention which contain antagonistic microorganisms admixed with the nutrient for the antagonistic microorganism enables the propagation of the antagonistic microorganisms to be retained for a longer period. Particularly when the substance selected as the nutrient for the antagonistic microorganism does not serve as a nutrient for the pathogenic fungi in the soil, the agent incorporated in the soil is much more effective in controlling the soil-borne diseases. The nutrient is encapsulated in the granular material, causes the granular material to have a slow-releasing property and is particularly effective for propagation of the microorganisms in the granular material and for maintenance of the activity of the microorganisms.

Now, the present invention will be described further in detail below with reference to working examples. It should be noted, however, that the present invention is not limited in any respect by the following description.

EXAMPLE 1

Four hundred (400) g each of master powders containing Trichoderma viride (Tricho) a microorganism antagonistic to fusarium bacteria infesting hothouse tomatoes, Arthrotrys oligospore (Arthro), a microorganism eating root-knot nematodes promoting fusarium wilt, Aspergillus (Asper) and Bacillus, microorganisms antagonistic to soil bacteria in general, was separately mixed with 1 kg of calcium sulfate particles 5 $\mu$ in

average particle diameter and granulated with Japan wax as a binder at 60°C. The granules of the soil-borne disease material of the present invention consequently obtained had an average particle diameter of 1 mm, a microorganism content of 1.8 x 10$^{10}$ per g, and a coating substance content of 18% by weight. The material was left standing at room temperature for three months to test its shelf life. The results are shown in Table 1 below, indicating that the material retained the microorganism stably for a fairly long time.

## Table 1

| Species | Yield of granulation | Survival ratio of cells | | |
|---------|---------------------|-------------------------|----------|----------|
| | | 1 month | 2 months | 3 months |
| Tricho | 88% | 98% | 95% | 97% |
| Arthro | 92% | 95% | 86% | 94% |
| Asper | 82% | 91% | 93% | 88% |
| Bacillus | 95% | 88% | 91% | 87% |

A mixture of equal amounts of the four granular materials was incorporated in soil in an amount corresponding to 0.1% of the weight of the soil and tested for effect in controlling the Pseudomonas solanacearum of tomatoes.

```
Conditions for field test:
      Number of test plots        2
      Number of plants tested     10
      Period of test              3 months
      Time for starting test      April
```

Results of field test: The plants were examined at intervals of one month to find the population pathogen contracting disease. The results are shown in Table 2 below. It is noted clearly that none of the plants in the test plot contracted disease, whereas the plants in the control plot did. The data indicate that the materials were markedly effective in controlling disease.

## Table 2

| Plot | 1 month | 2 months | 3 months |
|------|---------|----------|----------|
| Control | 3 plants | 8 plants | 10 plants |
| Test | No plant | No plant | No plant |

6

EXAMPLE 2

Granular materials of this invention were produced by following the procedure of Example 1, except that Trichoderma harzianum and Penicillium chrysogerum, both microorganisms antagonistic to rhizoctonia disease, were used instead.

To be specific, a granular material (capsulated agents) having an average particle diameter of 1.5 mm∅, a microorganism content of $2 \times 10^{10}$ per g, and a coating substance content of 20% by weight was obtained by mixing 200 g of microorganisms of the former species with 1,400 g of an excipient (talc) and granulating the resultant mixture with 400 g of Japan wax as a binder at 60°C. A granular material (capsulated agents) having an average particle diameter of 1.0 mm∅, a microorganism content of $1.3 \times 10^9$ per g, and a coating substance content of 16% by weight was obtained by mixing 200 g of microorganisms of the latter species with 1,480 g of an excipient (talc) and granulating the resultant mixture with 320 g of tallow as a binder at 60°C.

The former granular material possessed a high coating substance content and released the microorganisms at a slow speed into the soil and the latter granular material possessed a low coating substance content and released the microorganisms at a fast speed into the soil.

The granular materials of the present invention obtained as described above were plowed in soil which infested with bacterial spinach wilt yearly incident as follows.

A fertilizer was applied to the soil and, at the same time, the former and latter granular materials were sprayed respectively in an amount of 150 kg/10are (equivalent to 0.01% per soil) on the soil and then thoroughly mixed with the soil. Then, seeds of spinach were sown on the soil.

The ratio of occurrence of the disease on the spinach was about 20% based on that in an untreated plot.

EXAMPLE 3

Granular materials of this invention containing microorganisms of three species, i.e. Trichoderma harzianum which is a microorganism antagonistic to the bacteria responsible for root rot disease of konjaku, Pecdomonascepacia which is a microorganism characterized by possessing mobility to the roots of konjaku, and Dactyiella ellipospore which is a parasitic trapping fungi to root-rot nematodes promoting root rot disease, and substances serving each as a nutrient for the microorganisms were produced. To be more specific, the microorganisms and 10% by weight, based on the total weight of the granular material, of fish meal serving as a nutrient for the microorganisms and, exclusively in the case of the Trichoderma harzianum, 30% by weight of starch serving as a nutrient for the microorganisms but not for the bacteria of root rot disease, were mixed and granulated. For the granulation, calcium sulphate was used as an excipient and Japan wax as a binder. The coating with the binder accounted for a content of 20% by weight, based on the weight of the granular material. The microorganism content in the granular material containing Trichoderma harzianum was $1.3 \times 10^9$ per g and the average particle diameter was 0.8 mm∅. The microorganism contents in the granular materials containing Pecdomonascepacia and Dactyiella ellipospora were respectively $2.1 \times 10^8$/g and $3.67 \times 10^8$/g. The three granular materials were mixed with zeolite powder to obtain a mixture containing the materials each in a concentration of 5% by weight. The mixture was applied to the konjaku field at the rate of 100 kg/10are, 150 kg/10are and 200 kg/10are respectively to one-year old corms, two-year old corms, and three-year old corms.

The mixture thus applied to the field was examined for change by aging. The results are shown in Table 3 below. At each of the stages, the material manifested a conspicuous effect.

Table 3

| | Increased harvest of one-year old corms (%) | Increased harvest of two-year old corms (%) | Three-year old corms | |
|---|---|---|---|---|
| | | | Amount harvested kg/10are | Yield of powder (%) |
| Untreated Plot | 100 | 100 | 982 | 100 |
| Treated Plot | 145 | 132 | 2705 | 184 |

**Claims**

1. A granular material for the control of soil-borne diseases, characterised in that it contains saprophytic microbial bodies and is coated with 10 to 45% by weight of a hydrophobic substance.

2. A granular material as claimed in claim 1, wherein the saprophytic microbial bodies include at least one species selected from the group consisting of Agrobacterium radiobacter strain 84, Trichoderma, Penicillium, Gliocladium, Pseudomonas, Bacillus, Fusarium and Verticillium.

3. A granular material as claimed in claim 1 or claim 2, wherein the number of said saprophytic microbial bodies contained therein is at least $10^3$ per g.

4. A granular material as claimed in claim 1 or claim 2, wherein the number of said saprophytic microbial bodies contained therein is at most $10^{13}$ per g.

5. A granular material as claimed in any of the claims 1 to 4, which is produced by coating a mixture of the saprophytic microbial bodies and an excipient having a solubility of not more than 5 g/100 g $H_2O$ with a hydrophobic binder substance possessing a melting point or softening point in the range of 35° to 100 °C.

6. A granular material as claimed in claim 5, wherein the excipient is at least one member selected from the group consisting of calcium sulfate, calcium carbonate, calcium phosphate, aluminum oxide, magnesium oxide, silicon oxide, talc and molecular sieves.

7. A granular material as claimed in claim 5 or 6, wherein said hydrophobic binder is at least one member selected from the group consisting of tallow, rice wax, Japan wax, beeswax, candelilla wax, carnauba wax and lanolin.

8. A granular material as claimed in any of the claims 1 to 7 wherein said granular material comprises granules having an average diameter in the range of 70 $\mu$ to 10 mm.

9. A granular material as claimed in any of the claims 1 to 8, wherein said saprophytic microbial bodies are incorporated with a substance serving as a nutrient for said saprophytic microbial bodies.

8

**10.** A method for the control of soil-borne diseases, characterised in that a granular material for the control of soil-borne diseases according to any one of the claims 1 to 9 is added to the soil under treatment.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | DERWENT CENTRAL PATENTS INDEX, BASIC ABSTRACTS JOURNAL, section C, week 8817, Derwent Publications Ltd, London, GB;<br>& JP-A-63 063 373 (SHOWA DENKO K.K.) 19-03-1988<br>* B07 Nr. 116462/17 *<br>– – – | 1-9 | A 01 N 63/00<br>A 01 N 63/04<br>A 01 N 25/12 //<br>(A 01 N 63/00<br>A 01 N 63:04<br>A 01 N 25:12 ) |
| X | EP-A-0 145 087   (SOLVAY & CIE)<br>* Page 6, line 31 - page 7, line 16; page 9, line 11 - page 10, line 10; example; claims *<br>– – – | 1-6,8,9 | |
| X | DERWENT CENTRAL PATENTS INDEX, BASIC ABSTRACTS JOURNAL, section C, week 7517, Derwent Publications Ltd, London, GB;<br>& JP-A-50 004 232 (TOYO JUZO CO., LTD) 17-01-1975<br>* B04 Nr. 28201W/17 *<br>– – – | 1 | |
| X | FR-A-2 394 606   (INRA et ANVAR)<br>* Claims *<br>– – – | 1 | |
| A | CHEMICAL ABSTRACTS, vol. 111, no. 25, 18th December 1989, page 668, abstract no. 231318m, Columbus, Ohio, US;<br>& JP-A-01 13 004 (FUJI TITANIUM INDUSTRY CO., LTD) 17-01-1989<br>– – – – – | | |
| | | | **TECHNICAL FIELDS SEARCHED (Int. Cl.5)**<br><br>A 01 N |

The present search report has been drawn up for all claims

| Place of search | Date of completion of search | Examiner |
|---|---|---|
| The Hague | 03 April 91 | DONOVAN T.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document